# EUROPÄISCHE PATENTANMELDUNG

(11) **EP 0 997 668 A2**
(43) Veröffentlichungstag der Anmeldung: **03.05.2000**
(21) Anmeldenummer: 99119263.4
(22) Anmeldetag: 28.09.1999
(51) Int. Cl.: F16H 59/02

(54) **Übersetzungswahlvorrichtung für ein Fahrzeug**

(30) Priorität: 28.10.1998 DE 19849716
(71) Anmelder: Bayerische Motoren Werke Aktiengesellschaft, 80809 München (DE)
(72) Erfinder: Peterreins, Klaus, 82343 Pöcking (DE)
(74) Vertreter: Zollner, Richard

(57) **Zusammenfassung**

Die Erfindung betrifft eine Übersetzungswahllvorrichtung für ein Fahrzeug mit einer Bedienvorrichtung, die in einem Modus in zumindest zwei Richtungen zum Ändern der Übersetzung eines Getriebes betätigbar und mit einer Steuervorrichtung zur Auswertung der entsprechend der Betätigung abgegebenen Signale verbunden ist, wobei die Steuervorrichtung entsprechend der Auswertung das Getriebe beaufschlagt.

Die Aufgabe, auch bei einem automatisierten Schaltgetriebe Gänge überspringen zu können, wird bei einer Übersetzungswechselvorrichtung der eingangs genannten Art dadurch gelöst, daß die Bedienvorrichtung derart ausgebildet ist, daß durch ein Überdrücken in zumindest einer der zwei Richtungen zumindest die nächste in Verstellrichtung einstellbare Übersetzungsstufe überspringbar ist.

## Beschreibung

Die Erfindung betrifft eine Übersetzungswahlvorrichtung für ein Fahrzeug gemäß dem Oberbegriff des Anspruchs 1 sowie ein Verfahren gemäß dem Oberbegriff des Anspruchs 5.

Die vorliegende Erfindung betrifft eine Übersetzungswahlvorrichtung für ein Fahrzeug mit automatisiertem Getriebe oder Automatikgetriebe, wobei eine Bedienvorrichtung in einem Modus in zumindest zwei Richtungen zum manuellen Ändern der Übersetzung eines Getriebes betätigbar ist.

Vielfach sind Automatikgetriebe bekannt geworden, bei denen ein Wählhebel zum einen in einer Automatikgasse und zum anderen in einer manuellen Schaltgasse bewegt werden kann. In der Automatikgasse werden Fahrstufen wie P, R, N, D etc. eingelegt. In der Fahrstufe D wird ein Getriebe gemäß einem Schaltprogramm in Abhängigkeit von Fahrbetriebsbedingungen automatisch betrieben.

In der manuellen Schaltgasse können die einzelnen Gänge oder Übersetzungsverhältnisse durch manuelles Schalten, beispielsweise stufenweise, verändert werden. Diese Schaltungen sind auch unter dem Namen Steptronic oder Tiptronic (eingetragene Marken der Bayerischen Motoren Werke AG bzw. der Firma Porsche) bekannt.

Darüber hinaus sind auch automatisierte Schaltgetriebe bekannt, bei denen ebenfalls durch manuelles Betätigung eines Wahlhebels in zumindest zwei verschiedene Richtungen ein normales Schaltgetriebe automatisiert hoch- oder heruntergeschaltet wird.

Aus der DE 198 31 514 ist ein Steuerverfahren für ein stufenloses Getriebe bekannt, bei dem bei Betätigung einer Wähleinrichtung in eine Richtung das Übersetzungsverhältnis zunächst um eine Mindestverstellung geändert wird. Bei einer fortdauernden Betätigung des Wählhebels erfolgt dann eine weitere kontinuierliche Verstellung in die gleiche Verstellrichtung. Gemäß einer besonderen Ausführungsform wird ein besonderes, automatisches Fahrprogramm dann eingelegt, wenn der Wählhebel in einer Richtung über einen Widerstand überdrückt wird.

Aus der DE 34 34 205 A1 ist ein Geber für ein Schaltgetriebe eines Kraftfahrzeugs bekannt, bei dem am Schalthebel eine separate Taste angeordnet ist, die - wenn gedrückt - beim Betätigen des Schalthebels in eine bestimmte Schaltrichtung das Überspringen der nächsten Schaltstufe vorsieht.

Aufgabe der Erfindung ist es, eine Vorrichtung und ein Verfahren der eingangs genannten Art anzugeben, mit der bzw. mit dem ein komfortables Überspringen zumindest einer Gangstufe beim Schalten auch bei automatisierten Getrieben oder Automatikgetrieben möglich ist.

Diese Aufgabe wird vorrichtungstechnisch durch die im Anspruch 1 und verfahrenstechnisch durch die im Anspruch 5 genannten Merkmale gelöst.

Erfindungswesentlich dabei ist, daß ein Bedienelement zur Übersetzungswahl in zumindest einer Richtung, in der eine nächste Übersetzungsstufe gewählt wird, überdrückbar ist, und durch eine solche Überdrückung das Überspringen einer oder mehrerer in dieser Verstellrichtung anstehender Verstell- oder Gangstufen veranlaßt wird. Somit muß der Fahrzeugbediener die Bedienvorrichtung nicht mehrmals in die gleiche Richtung verschwenken. Es reicht ein einmaliges Überdrücken zur entsprechenden Übersetzungs- bzw. Gangauswahl aus. Dabei kann eine Doppelhoch- oder -rückschaltung erfolgen. Alternativ kann auch eine Mehrfachhoch- oder -rückschaltung erfolgen, wobei die einzulegende Gangstufe von den Fahrzeug-Betriebsbedingungen abhängig gemacht werden kann.

Die vorliegende Erfindung läßt sich sowohl in Form eines Wählhebels wie er bereits bei automatisierten Handschaltgetrieben oder Automatikgetrieben vorhanden ist, realisieren. Es können jedoch auch Kipptaster oder -schalter im Lenkrad als Bedienelement vorgesehen sein.

Die vorliegende Erfindung wird nachfolgend anhand eines Ausführungsbeispiels und mit Bezug auf die einzige beiliegende Zeichnung näher erläutert.

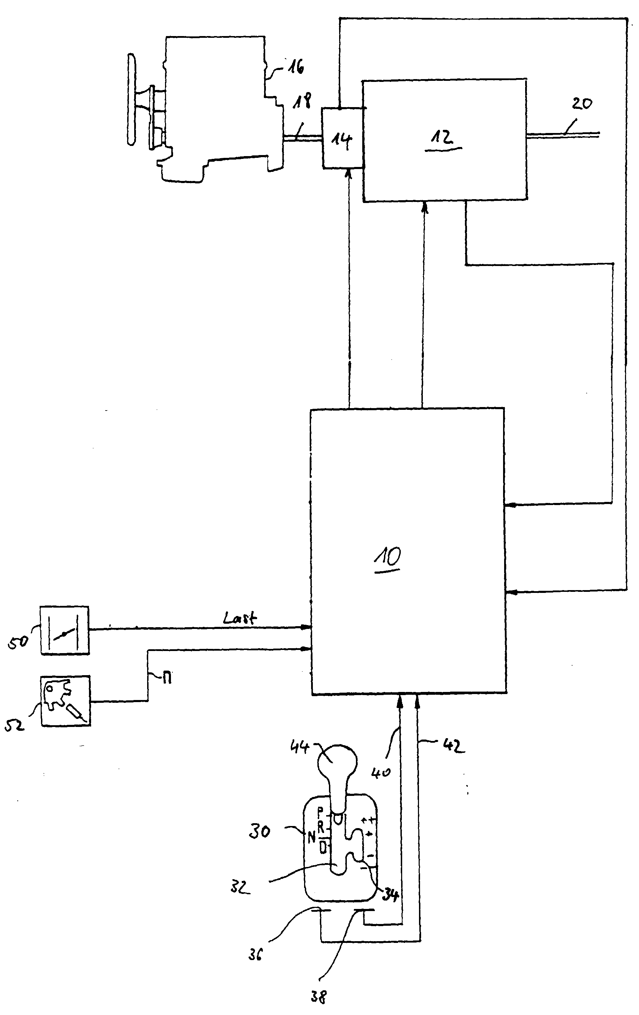

Die Zeichnung zeigt ein schematisches Blockdiagramm. Eine Getriebe- und Kupplungssteuereinrichtung 10 empfängt von einer Bedienvorrichtung 30 Schaltsignale und stellt aufgrund dieser Information sowie aufgrund von anderen Betriebsbedingungen eine bestimmte Übersetzung an einem Getriebe 12 ein. Vorliegend wird ein automatisiertes Schaltgetriebe verwendet, welches einen besonders günstigen Wirkungsgrad besitzt. Jedoch kann die Erfindung auch mit Automatik- oder CVT-Getrieben realisiert werden.

Vorliegend werden als weitere Betriebsbedingungen die Last- und die Drehzahl n, die von einem Lastsensor 50 bzw. Drehzahlgeber 52 stammen, in die Getriebe- und Kupplungssteuerung 10 eingelesen. Natürlich können auch noch weitere Signale; Informationen und Werte von der Getriebe- und Kupplungssteuerung 10 erfaßt und berücksichtigt werden.

Die Getriebe- und Kupplungsvorrichtung 10 steuert auch eine mit dem Getriebe gekoppelte Kupplung 14, die über eine Antriebswelle 18 mit einem Verbrennungsmotor 16 eines Fahrzeugs verbunden ist. Das Getriebe 12 stellt das Fahrmoment über die Abtriebswelle 20 den Antriebsrädern zur Verfügung.

Die Betriebszustände der Kupplung 14 sowie des Getriebes 12 werden über Rückkopplungsleitungen an die Getriebe- und Kupplungssteuerung 10 zurückgeleitet.

Die Getriebe- und Kupplungssteuerung 10 erhält - wie oben bereits genannt - Signale von der Bedienvorrichtung 30 und zwar über die Eingangsleitungen 40 bzw. 42. Die Bedienvorrichtung 30 umfaßt einen Wählhebel 44, der zum einen in einer Automatikgasse 32 oder in einer manuellen Schaltgasse 34 bewegbar ist. In der Automatikgasse 32 werden die Fahrstufen P, R, N und D entsprechend einer Schaltkennlinie automatisch eingestellt.

In der manuellen Schaltgasse kann der Wählhebet 44 in +- oder - Richtung verschwenkt werden, wobei jeder Versteilvorgang eine Hoch- bzw. Rückschaltung durchführt, soweit dies die Motorbetriebsbedingungen zulassen. Die entsprechenden Schaltinformationen werden über Schaltkontakte 36 und 38 erfaßt.

Erfindungsgemäß kann der Wählhebel 44 in der manuellen Gasse 34 in beide Richtungen überdrückt werden, vorliegend durch die ++ und -- Bezeichnungen dargestellt. Bei Überdrücken des Wählhebels 44 über einen Widerstand wird dies der Getriebe- und Kupplungssteuereinheit 10 mitgeteilt. Diese veranlaßt das Getriebe 12, die nächste in dieser Verstellrichtung anstehende Übersetzungs- bzw. Gangstufe zu überspringen und die übernächste Gangstufe einzulegen.

Alternativ kann auch eine Steuerung vorgesehen sein, die beim Überdrücken des Wählhebels in eine Verstellrichtung einen Schaltvorgang derart durchführt, daß nicht die übernächste Gangstufe sondern eine den Fahrzeugbetriebsbedingungen angepaßte Gangstufe eingelegt wird.

Insgesamt ist es somit nicht mehr notwendig, den Wählhebel 44 mehrfach in + oder - Richtung zu bewegen. Vielmehr kann eine Gangstufe, wie dies bei einer herkömmlichen H-Schaltung auch möglich ist, übersprungen werden. Insgesamt kann daher eine Komforterhöhung unter Beibehaltung einer raschen hohen Zugkraftänderung erreicht werden, wobei dem Fahrer eine höhere Schaltflexibilität angeboten wird.

## Patentansprüche

1. Übersetzungswahlvorrichtung für ein Fahrzeug mit einer Bedienvorrichtung, die in einem Modus in zumindest zwei Verstellrichtungen zum manuellen Verändern der Übersetzung eines Getriebes betätigbar und mit einer Steuervorrichtung zur Auswertung der entsprechend der Betätigung abgegebenen Signale verbunden ist, wobei die Steuervorrichtung das Getriebe beaufschlagt,
dadurch gekennzeichnet,
daß die Bedienvorrichtung (30, 44) in zumindest einer Richtung überdrückbar ausgebildet ist, ein Überdrücken von der Steuervorrichtung (10) detektiert wird und diese beim Erfassen des Überdrückens zumindest die nächste in dieser Verstellrichtung einstellbare Übersetzungsstufe überspringt.

2. Übersetzungswahlvorrichtung nach Anspruch 1,
dadurch gekennzeichnet,
daß die Bedienvorrichtung (30, 44) einen Wählhebel (44) umfaßt, der in zumindest einer manuellen Schaltgasse (34) in Fahrtrichtung und entgegen der Fahrtrichtung des Fahrzeugs betätigbar ist.

3. Übersetzungswahlvorrichtung nach Anspruch 1,
dadurch gekennzeichnet,
daß die Bedienvorrichtung Tast- oder Kippschalter am Lenkrad des Fahrzeugs umfaßt.

4. Übersetzungswahlvorrichtung nach einem der vorhergehenden Ansprüche,
dadurch gekennzeichnet,
daß die Steuervorrichtung (10) derart ausgebildet ist, daß bei einem erkannten Überdrücken der Bedienvorrichtung in eine Verstellrichtung eine Doppelhoch- oder -rückschaltung oder je nach Motorbetriebsbedingung eine Mehrfachhoch- oder -rückschaltung durchführbar ist.

5. Verfahren zum Wechsel einer Übersetzung bei einem Fahrzeug, bei dem eine Bedienvorrichtung in einem Modus in zumindest zwei Richtungen zum manuellen Ändern der Übersetzung eines Getriebes betätigbar und mit einer Steuervorrichtung zur Auswertung der entsprechend der Betätigung abgegebenen Signale verbunden ist, wobei die Steuervorrichtung entsprechend der Auswertung das Getriebe beaufschlagt,
dadurch gekennzeichnet,
daß die Bedieneinrichtung zum Überspringen einer nächsten in Verstellrichtung einzustellenden Übersetzungsstufe in zumindest einer Richtung überdrückt wird.
